# EUROPÄISCHE PATENTSCHRIFT

(11) **EP 3 628 935 B1**
(45) Veröffentlichungstag und Bekanntmachung des Hinweises auf die Patenterteilung: **07.06.2023**
(21) Anmeldenummer: 19200028.9
(22) Anmeldetag: 27.09.2019
(51) Int. Cl.: F24D 19/00

(54) **HEIZKÖRPER**
RADIATOR
RADIATEUR

(30) Priorität: 28.09.2018 AT 508312018
(43) Veröffentlichungstag der Anmeldung: 01.04.2020
(73) Patentinhaber: PG Austria GmbH, 8661 St. Barbara im Mürztal (AT)
(72) Erfinder: DOPPELREITER, Peter, 8605 Kapfenberg (AT)
(74) Vertreter: Wildhack & Jellinek

(56) Entgegenhaltungen:
- EP-A1- 3 109 561
- DE-A1- 10 157 747
- DE-A1-102011 084 297
- DE-U1- 20 021 519

## Beschreibung

Die vorliegende Erfindung betrifft einen Heizkörper gemäß dem Oberbegriff des Anspruchs 1.

Die Erfindung liegt auf dem Gebiet der Heizkörpertechnik und befasst sich im Wesentlichen mit Mittenanschluss-Heizkörpern, die über variable Anschlussmöglichkeiten verfügen.

Heizkörper mit Mittenanschluss sind grundsätzlich bekannt, ebenso sind Heizkörper mit Mittenanschluss bekannt, die über ein Steigrohr verfügen, beispielsweise aus der DE 102 03 313 A1 oder der DE 195 39 222 C1.

Auch ist es bekannt, derartige Heizkörper mit variablen Anschlussmöglichkeiten für den Vor- und Rücklauf auszustatten. So ist in der EP 2 428 748 A2 beispielsweise ein seriell durchströmter Heizkörper mit zwei Heizplatten beschrieben, bei dem zwei alternative Vorlauf- bzw. Rücklaufarmaturen vorgesehen sind. In der EP 3 109 561 ist ein Heizkörper gemäß dem Oberbegriff des Anspruchs 1 und damit ein variabler Mittenanschluss-Heizkörper beschrieben, bei dem der Vorlauf entweder über eine mittige Vorlaufarmatur und ein mittiges Steigrohr in den Heizkörper eingebracht werden kann oder alternativ über einen seitlichen zusätzlichen Vorlaufanschluss.

Mittenanschlüsse sind vor allem in Neubauten mittlerweile Standard. Die Vorsehung eines weiteren, außermittigen seitlichen Vorlaufanschlusses dient zur Erhöhung der Anschlussvariabilität und ist gerade für den Austausch von Heizkörper in Altbauten vorteilhaft.

Aufgabe der vorliegenden Erfindung ist es somit einen Mittenanschluss-Heizkörper der eingangs erwähnten Art zu schaffen, der über eine hohe Anschlussvariabilität verfügt und gleichzeitig konstruktiv einfach herzustellen ist und Vorteile bei der Führung des Heizfluides besitzt.

Diese Aufgabe wird durch die kennzeichnenden Merkmale des Anspruchs 1 gelöst. Erfindungsgemäß ist dabei vorgesehen, dass eine, an eine zweite alternative Anschlussgarnitur angeschlossene, zweite Verteilergarnitur mit einem definierten zweiten Steigrohr vorgesehen ist, die eine direkte, insbesondere die einzige, Verbindung für das, über den zweiten alternativen Vorlaufanschluss einströmende, Heizfluid von der zweiten alternativen Anschlussgarnitur zu den Verbindungsstücken herstellt.

Auf diese Weise lassen sich multivariable universelle Anschlussmöglichkeiten verwirklichen. Die erforderliche Anzahl unterschiedlicher Modelle kann verringert werden und gleichzeitig wird auch die Vorbereitung und Planung für Installationsunternehmen einfacher. So brauchen beispielsweise nur geringere Anzahlen an Heizkörpern auf Lager gehalten zu werden und der Heizkörper kann vor Ort flexibel an die lokalen Anschlussgeometrien angepasst werden.

Aufgrund der Tatsache, dass beim erfindungsgemäßen Heizkörper nunmehr zwingend zumindest zwei Steigrohre vorgesehen sind, ein mittiges sowie ein seitliches, liegt auch eine thermodynamisch vorteilhaftere Heizfluidführung vor, denn unabhängig davon, über welchen der Vorlaufanschlüsse das heiße Vorlaufwasser einströmt, wird dieses über das jeweilige Steigrohr zwangsläufig immer direkt nach oben und zum höchsten Punkt geführt und in die Heizplatten eingeleitet und sorgt so unabhängig von der Auswahl des Anschlusses für eine optimale Wärmeabgabe ohne Leistungsverluste.

In diesem Zusammenhang sind auch die Druckverluste bei Verwendung der seitlichen alternativen Anschlüsse geringer, da die Steigrohre direkt nach oben geführt werden und das Heizfluid nicht den Umweg über die Heizkörpermitte nehmen muss.

Weiters besteht bei der erfindungsgemäßen Ausführungsform keine Notwendigkeit der Vorsehung einer Verbindung zwischen der ersten mittigen Anschlussgarnitur und der zweiten alternativen Anschlussgarnitur. Dies bringt zunächst konstruktive Vorteile, denn die nicht erforderliche Quer- bzw. Horizontalverbindung schafft eine einfachere Konstruktion. Weiters besteht dadurch mehr Freiraum im unteren Bereich unterhalb der Konvektionsbleche und der komplette Bereich des Heizkörperquerschnitts steht für das Einbringen diverser Holme oder andere Fixiereinheiten zur Verfügung. Auch können auf diese Weise Kreuzverbindungen zwischen den Vor- und Rücklaufanschlüssen vermieden werden, wie diese beispielsweise in der EP 2 428 748 oder der EP 3 109 561 erforderlich sind. Dies ist einerseits aus konstruktiver Sicht vorteilhaft, vereinfacht die bautechnische Ausgestaltung und verringert den Platzbedarf und auch die Dicke des Heizkörpers. Gleichzeitig verringert dies aber auch die Gefahr von internen Leckagen und verhindert einen unerwünschten Wasseraustausch, vor allem dann, wenn der alternative Vorlaufanschluss durch den mittigen Rücklaufanschluss hindurchgeführt werden muss. Zudem hat dies auch thermodynamische Vorteile, denn das Vorlaufwasser wird auf diese Weise nicht durch den Rücklauf abgekühlt und daher gibt es auch bei großen Temperaturunterschieden zwischen Vor- und Rücklauf keine Leistungsminderungen.

Vorteilhafte Weiterentwicklungen der Erfindung werden durch die Merkmale der abhängigen Ansprüche definiert:
So ist es beispielsweise konstruktiv vorteilhaft, wenn der erste Vorlaufanschluss und der erste Rücklaufanschluss als, insbesondere zumindest teilweise kugelabschnittsförmig ausgestaltete, Vorlauf- bzw. Rücklaufgehäuse ausgebildet sind oder solche aufweisen.

Eine weitere vorteilhafte Ausführung sieht vor, dass das erste Steigrohr im Bereich zwischen dem ersten Vorlaufanschluss und dem ersten Rücklaufanschluss und/oder im Bereich zwischen dem Vorlaufgehäuse des ersten Vorlaufanschlusses und dem Rücklaufgehäuse des ersten Rücklaufanschlusses konstruktiv angebunden ist.

Um eine vorteilhafte Durchströmung zu ermöglichen, ist es vorteilhaft, wenn das erste Steigrohr im oberen Bereich in eine T-Verzweigung mündet, von der in entgegengesetzte Richtungen jeweils ein Rohr ausgeht, wobei jedes Rohr an seinem Endbereich jeweils mit dem Verbindungsstück verbunden ist. Auf diese Weise wird auch sichergestellt, dass das vom ersten oder einem der alternativen Vorlaufanschlüsse direkt nach oben steigende Heizfluid direkt und ohne größere Wärmeverluste auf die Heizplatten verteilt wird.

Aus konstruktiven und anschlusstechnischen Gründen ist es vorteilhaft, wenn das erste Steigrohr, von der Ebene der Heizplatte(n) betrachtet, in Bezug auf die Längserstreckung der Heizplatte(n) mittig angeordnet bzw. ausgerichtet ist und sich vorzugsweise gerade und vertikal, und insbesondere parallel zu den Seitenrändern der Heizplatte(n), nach oben erstreckt.

Um eine vorteilhafte Anschlussgeometrie und eine bessere Anpassung an bestehende Anschlüsse zu bewirken, ist es vorteilhaft, dass das erste Steigrohr von den seitlichen Stirnseiten der Heizplatte(n) betrachtet, eine von der Geraden abweichende Form besitzt und, insbesondere von einer unteren außermittigen Position in eine obere mittige Position, verschwenkt ist.

Gemäß einer vorteilhaften Ausführungsform kann vorgesehen sein, dass eine dritte alternative Anschlussgarnitur mit einem dritten alternativen Vorlaufanschluss und gegebenenfalls einem dritten alternativen Rücklaufanschluss vorgesehen ist, wobei eine, an die dritte alternative Anschlussgarnitur angeschlossene, dritte Verteilergarnitur mit einem definierten dritten Steigrohr vorgesehen ist, die eine direkte, insbesondere die einzige, Verbindung für das, über den dritten alternativen Vorlaufanschluss einströmende, Heizfluid von der dritten alternativen Anschlussgarnitur zu den Verbindungsstücken herstellt. Auf diese Weise können sowohl links als auch rechts der Mitte Vor- bzw. Rücklaufanschlüsse vorgesehen sein und die Anschlussvielfalt wird noch weiter erhöht.

In diesem Zusammenhang ist es besonders vorteilhaft und erhöht die Variabilität zusätzlich, wenn der zweite und gegebenenfalls der dritte alternative Vorlaufanschluss und gegebenenfalls der zweite und gegebenenfalls der dritte alternative Rücklaufanschluss jeweils in einem der seitlichen, außermittigen, unteren Eckbereiche des Heizkörpers angeordnet ist. Dies bietet gerade für Altbauten eine vorteilhafte Anschlussflexibilität für dort bereits vorhandene Anschlüsse.

Eine konstruktiv vorteilhafte Lösung besteht darin, dass das erste Steigrohr, das zweite Steigrohr und das dritte Steigrohr jeweils als separate und von den Heizkanälen der Heizplatten unabhängige und getrennte, Rohre ausgestaltet sind.

Eine baulich einfache und kostengünstige Variante sieht vor, dass das zweite Steigrohr und/oder das dritte Steigrohr gerade ausgebildet ist und sich vertikal, und insbesondere parallel zu den Seitenrändern der Heizplatte(n), nach oben erstreckt. Auf diese Weise kann auch mit einer geringeren Anzahl an Bauelementen das Auslangen gefunden werden.

Eine vor allem für die Durchströmung des Heizfluids vorteilhafte Konstruktion sieht vor, dass das zweite Steigrohr und/oder das dritte Steigrohr mit seinem oberen Ende in eines der Rohre einmündet oder in ein, stromaufwärts des jeweiligen Verbindungsstücks angeordneten und mit diesem Verbindungsstück konstruktiv verbundenen, Anschlusselement einmündet, wobei das Anschlusselement einen größeren Durchmesser als die Rohre aufweist. Dadurch wird sichergestellt, dass das heiße Heizfluid auf dem kürzesten Weg in den obersten Bereich in die Heizplatten einströmen kann, wobei gleichzeitig eine konstruktiv sichere Anbindung besteht.

Gemäß einer vorteilhaften Ausführungsform ist vorgesehen, dass zwischen der ersten Anschlussgarnitur und der zweiten und/oder dritten alternativen Anschlussgarnitur, insbesondere zwischen dem ersten Vorlaufanschluss und dem zweiten und/oder dritten alternativen Vorlaufanschluss, keine direkte Fluidverbindung und/oder keine konstruktive Verbindung besteht und/oder dass der untere Bereich des Heizkörpers frei von horizontalen Querverbindungen zwischen der ersten Anschlussgarnitur und der zweiten und/oder dritten alternativen Anschlussgarnitur ist. Diese Ausführung ist einerseits kostengünstig und konstruktiv einfach, andererseits auch thermodynamisch günstiger, da keine Kreuzverbindungen bestehen und das Heizmedium in jedem Fall, d.h. von jedem Vorlaufanschluss, zwangsläufig direkt nach oben geführt wird.

Um mit einer möglichst geringen Anzahl an Bauteilen auszukommen, ist es vorteilhaft, wenn die zweite Anschlussgarnitur sowie die zweite Verteilergarnitur und die dritte Anschlussgarnitur sowie die dritte Verteilergarnitur zueinander konstruktiv identisch ausgebildet sind.

Zur Sicherung der notwendigen Anschlussvariabilität, insbesondere auch für Neubauten und Altbauten, ist es vorteilhaft, wenn der zweite alternative Vorlaufanschluss und der dritte alternative Vorlaufanschluss in einer gemeinsamen Ebene und auf einer gemeinsamen Achse auf einander gegenüberliegenden Seiten der ersten Anschlussgarnitur hinsichtlich der Längserstreckung des Heizkörpers liegen.

Um den alternativen Vor- und Rücklaufanschlüssen besondere Stabilität zu geben und dadurch auch die Montage zu erleichtern, ist vorteilhafterweise vorgesehen, dass der zweite bzw. dritte alternative Vorlaufanschluss mit dem zweiten bzw. dritten alternativen Rücklaufanschluss konstruktiv zu einer baulichen Einheit verbunden sind, insbesondere über einen flachen Steg.

Eine vorteilhafte Weiterentwicklung besteht darin, dass der zweite bzw. dritte alternative Rücklaufanschluss als, insbesondere zumindest teilweise kugelabschnittsförmig ausgestaltetes, Rücklaufgehäuse, ausgebildet ist oder ein solches aufweist, und jeweils einen stirnseitigen, seitlich nach außen weisenden Rücklaufanschlussstutzen aufweist. Dadurch werden zusätzliche Anschlüsse für den Rücklauf geschaffen und die Variabilität und Anschlussvielfalt wird weiter gesteigert.

Gemäß einer vorteilhaften konstruktiven Ausgestaltung ist vorgesehen, dass der Heizkörper als mehrlagiger Heizkörper mit paralleler Durchströmung ausgestaltet ist und zumindest zwei parallel zueinander angeordnete Heizplatten aufweist. Die Durchströmungscharakteristik eines derartigen mehrlagigen parallel durchströmten Heizkörpers, ist grundsätzlich anders als die eines seriell durchströmten Heizkörpers, insbesondere als die des in der EP 2 428 748 A2 beschriebenen Heizkörpers. Im Gegensatz zu einem solchen seriellen Heizkörper mit zwei Platten, wird beim erfindungsgemäßen parallel durchströmten Heizkörper das Heizmedium - unabhängig davon, über welchen der beiden Vorlaufanschlüsse, also über den ersten Vorlaufanschluss oder den zweiten alternativen Vorlaufanschluss - direkt in die separaten Steigrohre geleitet und von dort, wie zuvor beschrieben auf alle Platten verteilt.

Eine besonders vorteilhafte Ausführungsform sieht dabei vor, dass genau zwei parallel zueinander liegende Heizplatten vorgesehen sind, eine erste raumseitige Heizplatte und eine zweite Heizplatte. Bei dieser Ausführungsform ist in das Verbindungsstück wahlweise jeweils ein Ventil zur Regelung des Durchflusses sowie zur parallelen Verteilung des vom ersten Vorlaufanschluss kommenden Heizfluids in beide Heizplatten sowie ein Absperr- bzw. Dichtbauteil zur Verhinderung des Eintritts und des Durchflusses von Heizfluid in bzw. zwischen die/den beiden Heizplatten einsetzbar oder eingesetzt.

Gemäß einer vorteilhaften konstruktiven Ausgestaltung ist vorgesehen, dass der Heizkörper als dreilagiger Heizkörper mit paralleler Durchströmung ausgestaltet ist und drei oder mehr parallel zueinander angeordnete Heizplatten aufweist, eine erste raumseitige Heizplatte, eine zweite näher der Wand gelegene Heizplatte und zumindest eine weitere raumseitige Heizplatte, die noch näher zum Raum gelegen ist bzw. noch weiter raumseitig ist als die erste raumseitige Heizplatte. Bei dieser Ausführungsform ist in das Verbindungsstück wahlweise jeweils ein Ventil zur Regelung des Durchflusses sowie zur parallelen Verteilung des vom ersten Vorlaufanschluss kommenden Heizfluids in alle Heizplatten sowie ein Absperr- bzw. Dichtbauteil zur Verhinderung des Eintritts und des Durchflusses von Heizfluid in bzw. zwischen die/den Heizplatten einsetzbar oder eingesetzt.

In diesem Zusammenhang ist es konstruktiv vorteilhaft, wenn der erste Vorlaufanschluss und der erste Rücklaufanschluss, und vorzugsweise auch der zweite und jeder weitere alternative Vorlaufanschluss und der zweite und jeder weitere alternative Rücklaufanschluss, und/oder alle Anschlussgarnituren, und/oder alle Verteilergarnituren, insbesondere alle Steigrohre, und/oder alle Verbindungsstücke, im Bereich zwischen der ersten Heizplatte und der zweiten Heizplatte liegen. Auf diese Weise liegen diese Bauteile einerseits vor mechanischen Einflüssen geschützt, aber auch sichtgeschützt, zwischen den Heizplatten.

Gemäß einer alternativen Ausführungsform kann auch vorgesehen sein, dass der Heizkörper als einlagiger Heizkörper mit einer einzigen Heizplatte ausgebildet ist, wobei in das Verbindungsstück wahlweise jeweils ein Ventil zur Regelung des Durchflusses sowie ein Absperr- bzw. Dichtbauteil zur Verhinderung des Eintritts von Heizfluid in die Heizplatte einsetzbar oder eingesetzt ist. Ein solcher einlagiger Heizkörper verfügt naturgemäß über keine parallele Durchströmung, wäre aber als konstruktiv sehr einfache und baulich schmale Lösung mit geringer Dicke für spezielle Einsatzzwecke ebenso vorteilhaft.

Weiters kann es vorteilhaft sein, wenn der erste Vorlaufanschluss und der erste Rücklaufanschluss und/oder der untere Endbereich des ersten Steigrohres in einer Ebene außermittig und ungleich beabstandet von der ersten und zweiten Heizplatte, insbesondere näher bei der wandseitigen zweiten Heizplatte, angeordnet sind. Dadurch ergibt sich, dass der zweite und jeder weitere alternative Vor- bzw. Rücklaufanschluss nicht in der selben Ebene zwischen den Heizplatten liegt wie der erste Vor- bzw. Rücklaufanschluss. Dies ist vorteilhaft, um eine noch bessere Kompatibilität vor allem für Altbauten zu erzielen.

Um noch größere Anschlussvielfalt zu schaffen, kann vorgesehen sein, dass in einem, vorzugsweise in jedem, freien unteren stirnseitigen Eckbereich des Heizkörpers ein seitlicher Anschlussstutzen als weiterer alternativer Rücklaufanschluss vorgesehen ist.

Insbesondere ist es vorteilhaft und erhöht die Anschlussflexibilität weiter, wenn alle seitlichen bzw. stirnseitigen Anschlüsse und Anschlussstutzen des Heizkörpers, insbesondere die Anschlüsse der Verbindungsstücke, die seitlichen Anschlussstutzen und/oder die Rücklaufanschlussstutzen, gleiche Dimensionen, insbesondere gleiche Innendurchmesser bzw. Gewindedimensionen, zum wechselseitigen, austauschbaren Einsetzen von Ventilen und/oder Absperr- bzw. Dichtbauteilen, aufweisen. Dies dient vorteilhafterweise zum wechselseitigen, austauschbaren Einsetzen von Ventilen und/oder Absperr- bzw. Dichtbauteilen. Die seitlichen Anschlüsse haben vorteilhafterweise ein 1/2 Zoll Innengewinde, die nach unten weisenden Vor- und Rücklaufanschlüsse vorteilhafterweise ein 3/4 Zoll Außengewinde.

Vorliegend wird unter dem Begriff "serielle Durchströmung" verstanden, dass das Heizmedium sich zuerst nur in einer der Heizplatten, zumeist der raumseitigen Frontplatte, verteilt und erst dann über ein Ventil oder andere Anschlüsse in die zweite, meist wandseitige, Heizplatte oder in weitere Heizplatten gelangt.

Unter dem Begriff "parallele Durchströmung" wird vorliegend verstanden, dass das vom Vorlauf kommende warme Heizmedium im Wesentlichen direkt zum Ventil geführt wird, hier über die Steigrohre, und von dort in beide Heizplatten verteilt wird. Dort sinkt das Heizmedium jeweils ab und verteilt sich über die Sammelkanäle und die Heizkanäle in den beiden Heizplatten.

Unter den Begriffen "konstruktiv bzw. mechanisch angebunden bzw. angeschlossen" wird vorliegend verstanden, dass eine Komponente, zumeist ein Rohr, mit einer anderen Komponente, beispielsweise einem Vorlaufgehäuse oder einem anderen Rohr, fest verbunden ist. Diese konstruktive bzw. mechanische Verbindung zwischen zwei Bauteilen stellt allerdings noch nicht zwingend gleichzeitig auch eine fluidtechnische bzw. hydraulische Verbindung dar.

Unter den Begriffen "hydraulisch bzw. fluidtechnisch bzw. strömungstechnisch bzw. fluidleitend angebunden bzw. verbunden" wird vorliegend verstanden, dass zwei Bauteile bzw. Komponenten so miteinander in Verbindung stehen, dass das Heizmedium von der einen in die andere Komponente gelangen kann. Dort, wo nur "angebunden" bzw. "verbunden" bzw. "einmünden" bzw. "angeschlossen" verwendet wird, wird dem Sinn entsprechend eine hydraulische bzw. fluidtechnische bzw. strömungstechnische Verbindung für das Heizfluid zu verstehen sein.

Unter dem Begriff "stromaufwärts" bzw. "stromabwärts" wird auf die im Regelbetrieb vorherrschende Durchströmungsrichtung des Heizfluids abgestellt. Die Durchströmungsrichtung ist in zahlreichen Bauteilen zwingend vorgegeben. So strömt beispielsweise das aus den Vorlaufanschlüssen kommende Heizfluid in den Steigrohren zwangsläufig nach oben und von dort in den oberen horizontalen Rohren zum offenen Ventil.

Im Folgenden wird die Erfindung anhand von exemplarischen und nicht einschränkend zu verstehenden Ausführungsbeispielen unter Berücksichtigung der nachfolgenden Zeichnungen näher erläutert:
Fig. 1a, 1b und 1c zeigen eine erste Ausführungsform eines zweilagigen Heizkörpers aus verschiedenen Ansichten.
Fig. 2a, 2b und 2c zeigen eine Variante der ersten Ausführungsform beschränkt auf die relevanten Bauteile.
Fig. 3 zeigt eine Variante der ersten Ausführungsform in perspektivischer Ansicht beschränkt auf die relevanten Bauteile.
Fig. 4a, 4b und 4c zeigen eine zweite Ausführungsform eines zweilagigen Heizkörpers aus verschiedenen Ansichten.

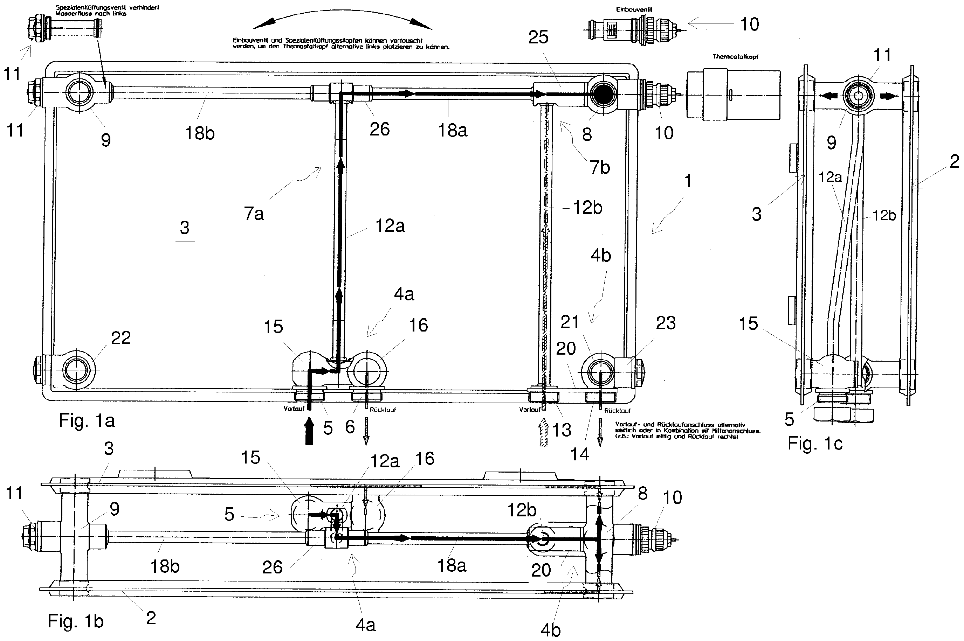

In Fig. 1a, 1b und 1c wird eine erste mögliche Ausführungsform des erfindungsgemäßen Heizkörpers dargestellt, nämlich ein zweilagiger Heizkörper 1 mit paralleler Durchströmung mit zwei Heizplatten 2, 3, nämlich einer vorderen, im Betrieb dem Raum zugewendeten ersten raumseitigen Heizplatte 2 und einer weiteren zweiten, wandseitigen Heizplatte 3. Die beiden Heizplatten 2, 3 sind parallel zueinander angeordnet und weisen in bekannter Weise jeweils einen oberen und einen unteren horizontalen Sammelkanal mit einer Anzahl von, diese Sammelkanäle verbindenden, vertikalen Heizkanälen auf. Im Raum zwischen den Heizplatten 2, 3 sind oft optional Konvektorbleche angeordnet, um die Leistung durch vergrößerte Wärmetauscherfläche zu erhöhen. Diese Details sind in den schematischen Darstellungen allerdings nicht gezeigt.

In der Mitte der Längserstreckung der beiden Heizplatten 2, 3 ist eine als Mittenanschluss ausgebildete erste Anschlussgarnitur 4a vorgesehen, umfassend einen ersten Vorlaufanschluss 5 und einen ersten Rücklaufanschluss 6 für den Ein- und den Austritt des Heizmediums. Die erste Anschlussgarnitur 4a ist im Bereich zwischen den Heizplatten 2, 3 angeordnet, wobei der erste Vorlaufanschluss 5 und der erste Rücklaufanschluss 6 in einer gemeinsamen Ebene parallel zu den Heizplatten 2, 3 liegen, allerdings außermittig versetzt und nicht gleich von den Heizplatten 2, 3 beabstandet und näher bei der wandseitigen Heizplatte 3 (siehe z.B. Fig. 1b). Der erste Vorlaufanschluss 5 und der erste Rücklaufanschluss 6 sind im vorliegenden Ausführungsbeispiel als kugelabschnittsförmig gestaltete Vorlauf- bzw. Rücklaufgehäuse 15, 16 ausgebildet.

Im Bereich zwischen dem Vorlaufgehäuse 15 und dem Rücklaufgehäuse 16 ist ein erstes Steigrohr 12a konstruktiv angebunden. Dieses erste Steigrohr 12a ist hydraulisch bzw. fluidtechnisch bzw. strömungstechnisch bzw. fluidleitend ausschließlich mit dem Vorlaufanschluss 5 verbunden. Das erste Steigrohr 12a liegt im Raum zwischen den Heizplatten 2, 3 und verläuft im Bezug auf die Längserstreckung der Heizplatten 2, 3 mittig und gerade und vertikal nach oben. Wie in Fig. 1c ersichtlich, weist das erste Steigrohr 12a allerdings, stirnseitig betrachtet, eine Verschwenkung bzw. einen Doppelknick auf und verläuft von der außermittigen untersten Position der ersten Anschlussgarnitur 4a in eine im oberen Bereich mittige und von den Heizplatten 2, 3 jeweils gleich beabstandete Position.

Bei dem ersten Steigrohr 12a handelt es sich um einen separaten Bauteil bzw. um ein separates Rohr, das nicht Teil der beiden Heizplatten 2, 3 ist und mit diesen weder mechanisch noch strömungstechnisch direkt und unmittelbar verbunden ist und von diesen beabstandet ist. Insbesondere handelt es sich bei dem ersten Steigrohr 12a nicht um einen vertikalen Heizkanal einer Heizplatte 2, 3.

Das erste Steigrohr 12a ist Teil einer ersten Verteilergarnitur 7a, wobei das erste Steigrohr 12a im obersten Bereich in eine T-Verzweigung 26 mündet und nach links und rechts in ein horizontales Rohr 18a, 18b übergeht. In den seitlichen oberen Eck- und Endbereichen der Heizplatte 2, 3 ist jeweils ein als Anschlussstelle ausgebildetes Verbindungsstück 8, 9 angeschlossen. In das in Fig. 1 linke Verbindungsstück 9 ist ein Absperr- bzw. Dichtbauteil 11 zur Verhinderung des Eintritts von Heizfluid in die bzw. des Durchflusses von Heizfluid zwischen den Heizplatten 2, 3 eingesetzt. In das gegenüberliegende rechte Verbindungsstück 8 ist ein Ventil 10 zur Regelung des Durchflusses sowie zur parallelen Verteilung des vom ersten Vorlaufanschluss 5 kommenden Heizfluids in die beeiden Heizplatten 2, 3 eingesetzt. Auf diese Weise wird dementsprechend die parallele Durchströmung des Heizkörpers 1 gewährleistet. Das erste Steigrohr 12a ist somit die einzige fluidtechnische Verbindung für das Heizfluid von der ersten Anschlussgarnitur 4a zu den beiden Verbindungsstücken 8, 9 und damit zu den beiden Heizplatten 2, 3.

In den Fig. 1a, 1b und 1c ist der Heizkörper 1 in Frontalansicht, Draufsicht bzw. Seitenansicht dargestellt, wobei mit schwarzen durchgehenden und schraffierten Pfeilen die Strömungsverläufe des Heizmediums angegeben sind. Die durch die schwarzen Pfeilen gekennzeichneten Strömungsverläufe sind im Prinzip bei allen weiteren hier beschriebenen Ausführungsformen gleich: Das Heizmedium tritt über den ersten Vorlaufanschluss 5 in das Vorlaufgehäuse 15 ein und gelangt dort direkt in das erste Steigrohr 12a. Dort steigt es auf und nimmt den Weg über das, hier rechte, horizontale Rohr 18a hin zum Verbindungsstück 8. Über das dort eingesetzte Ventil 10 wird die Durchflussmenge des Heizmediums in die Heizplatten 2,3 geregelt und bei offenem Ventil 10 gelangt das Heizmedium, wie in Fig. 1c ersichtlich, sowohl in die rechte raumseitige Heizplatte 2 als auch in die linke wandseitige Heizplatte 3. Das warme Heizmedium verteilt sich entsprechend über die oberen horizontalen Sammelkanäle jeder Heizplatte 2,3, sinkt über die vertikalen Heizkanäle ab und verteilt sich auf diese Weise auf beide Heizplatten 2,3 parallel. Aus dem unteren Sammelkanal der wandseitigen Heizplatte 3 gelangt das Heizmedium über das mittige Rücklaufgehäuse 16 zum ersten Rücklaufanschluss 6 und kann den Heizkörper 1 verlassen (grauer Pfeil in Fig. 1b).

Erfindungsgemäß ist nunmehr vorgesehen, dass zumindest eine zweite alternative Anschlussgarnitur 4b mit einem zweiten alternativen Vorlaufanschluss 13 und gegebenenfalls einem zweiten alternativen Rücklaufanschluss 14 vorgesehen ist. In der Ausführungsform gemäß Fig. 1 ist diese zweite alternative Anschlussgarnitur 4b im rechten unteren Eckbereich angeordnet, wobei der zweite alternative Vorlaufanschluss 13 an die vor allem in Altbauten bestehenden Anschlüsse angekoppelt werden kann. Weiters ist auch eine zweite Verteilergarnitur 7b vorgesehen, wobei diese ein zweites Steigrohr 12b umfasst. Die zweite Verteilergarnitur 7b stellt eine direkte und in diesem Fall ebenfalls die einzige Verbindung für das über den zweiten alternativen Vorlaufanschluss 13 einströmende Heizfluid von der zweiten alternativen Anschlussgarnitur 4b zu den Verbindungsstücken 8, 9 her. Das Heizfluid tritt dementsprechend über den zweiten alternativen Vorlaufanschluss 13 in den Heizkörper ein, strömt in das zweite Steigrohr 12b, steigt in diesem auf und wird über die Rohre 18a, 18b zu den Verbindungsstücken 8, 9 geführt. Das zweite Steigrohr 12b kann dabei entweder direkt in die Rohre 18a, 18b einmünden oder mündet, wie in Fig. 1 gezeigt, in ein Anschlusselement 25. Dieses Anschlusselement 25 liegt zwischen den Rohren 18a, 18b und den Verbindungsstücken 8, 9 bzw. stromaufwärts der jeweiligen Verbindungsstücke 8, 9 und ist mit diesen Verbindungsstücken 8, 9 sowohl konstruktiv als auch fluidtechnisch verbunden. Das Anschlusselement 25 besitzt einen größeren Durchmesser als die Rohre 18a, 18b. In der Ausführungsform gemäß Fig. 1 ist vorgesehen, dass das zweite Steigrohr 12b von unten in das Anschlusselement 25 einmündet, wodurch eine konstruktiv sichere Verbindung sichergestellt ist.

Im Gegensatz zum ersten Steigrohr 12a ist das zweite Steigrohr 12b in jeder Hinsicht bzw. von jeder Richtung aus betrachtet gerade und erstreckt sich vertikal und parallel zu den Seitenrändern der Heizplatten 2, 3 nach oben. Das zweite Steigrohr 12b ist dabei näher zu den Seitenrändern der Heizplatten 2, 3 angeordnet als zum mittigen ersten Steigrohr 12a.

Sowohl das erste Steigrohr 12a als auch das zweite Steigrohr 12b sind jeweils als eigenständiges und separates Rohr ausgestaltet und von den Heizplatten 2, 3 beabstandet und getrennt und insbesondere auch von den Heizkanälen der Heizplatten 2, 3. Bei den Steigrohren 12a, 12b handelt es sich somit nicht um Heizkanäle der Heizplatten 2, 3, sondern um konstruktiv eigenständige Bauteile.

Wesentlicher Vorteil dieser Ausführungsform ist, dass zwischen der ersten Anschlussgarnitur 4a und der zweiten Anschlussgarnitur 4b weder eine konstruktive, aber insbesondere keine fluidtechnische Verbindung besteht, insbesondere keine direkte im unteren Bereich des Heizkörpers liegende horizontale Querverbindung. Das Heizfluid kann also entweder über den ersten Vorlaufanschluss 5 oder alternativ über den zweiten alternativen Vorlaufanschluss 13 einströmen, wird aber dann vom ersten Vorlaufanschluss 5 in das erste Steigrohr 12a oder alternativ vom zweiten alternativen Vorlaufanschluss 13 in das zweite Steigrohr 12b zwangsgeführt. Das über den ersten Vorlaufanschluss 5 einströmende Heizfluid kann also nicht in das zweite Steigrohr 12b einfließen oder umgekehrt. Die erste Anschlussgarnitur 4a ist von der zweiten Anschlussgarnitur 4b sowohl konstruktiv als auch strömungstechnisch komplett getrennt. Auch zwischen dem ersten Steigrohr 12a und dem zweiten Steigrohr 12b gibt es keine Querverbindungen. Erst in den oberen horizontalen Rohren 18a, 18b liegen für beide Anschlussalternativen gemeinsame Fluidkanäle vor.

Wie aus Fig. 1b und 1c ersichtlich, liegen der erste Vorlaufanschluss 5 und der Rücklaufanschluss 6 bzw. die erste Verteilergarnitur 4a sowie der untere Endbereich des ersten Steigrohrs 12a in einer Ebene außermittig zwischen den Heizplatten 2, 3 und näher bei der wandseitigen zweiten Heizplatte 3. Der zweite Vorlaufanschluss 13 sowie der zweite Rücklaufanschluss 14 bzw. die zweite Anschlussgarnitur 4b sowie der untere Endbereich des zweiten Steigrohrs 12b liegen hingegen in einer Ebene mittig zwischen und gleich beabstandet von der ersten und zweiten Heizplatte 2, 3.

Im Betrieb strömt das Heizfluid, wenn es über den alternativen zweiten Vorlaufanschluss 13 einströmt, somit direkt in das zweite Steigrohr 12b, steigt dort auf, wird über das Anschlussstück 25 in das Verbindungsstück 8 geführt und verteilt sich dann analog zu einem über die erste Anschlussgarnitur 4a einströmenden Heizfluid.

Neben dem zweiten alternativen Vorlaufanschluss 13 ist auch ein zweiter alternativer Rücklaufanschluss 14 vorgesehen. Der zweite alternative Vorlaufanschluss 13 ist mit dem zweiten alternativen Rücklaufanschluss 14 zu einer konstruktiven baulichen Einheit verbunden, und zwar über einen flachen Steg 20. Der zweite alternative Rücklaufanschluss 14 ist dabei als kugelabschnittsförmig gestaltetes Rücklaufgehäuse 21 ausgebildet. Das Heizmedium kann den Heizkörper 1 - statt über den ersten Rücklaufanschluss 6 - über diesen alternativen Rücklaufanschluss 14 verlassen, und zwar über die beiden unteren Sammelkanäle der Heizplatten 2, 3 im rechten unteren Eckbereich. Der zweite alternative Rücklaufanschluss 14 ist dabei als T-Stück-Bauteil ausgebildet und besitzt eine Querverbindung sowohl zur ersten Heizplatte 2 als auch zur zweiten Heizplatte 3. Außerdem besitzt er einen optionalen stirnseitigen, seitlich nach außen weisenden Rücklaufanschlussstutzen 23, der als weiterer alternativer Rücklaufanschluss dienen kann und ansonsten von einem Sperrbauteil verschlossen ist.

Man kann also bei der Montage bzw. abhängig von der bauseitig vorgegebenen Situation wählen, ob das Heizmedium über den ersten Vorlaufanschluss 5 oder den zweiten alternativen Vorlaufanschluss 13 in den Heizkörper 1 einströmt. Ebenso kann gewählt werden, ob das Heizmedium den Heizkörper 1 über den ersten Rücklaufanschluss 6 oder den zweiten alternativen Rücklaufanschluss 14 oder über einen der seitlichen Rücklaufanschlussstutzen 23 verlässt. Bereits hierdurch ergeben sich viele verschiedene Anschlussvarianten.

Eine weitere Flexibilität der Anschlussgeometrien ist dadurch bewirkbar, dass die in den Verbindungsstücken 8, 9 eingesetzten Absperr- bzw. Dichtbauteile 11 und die Ventile 10 vertauscht werden können. Dies gelingt dadurch, dass die Verbindungsstücke 8, 9 baugleich ausgebildet sind oder dass zumindest die Innengewinde identisch und gleichdimensioniert sind, um eine Austauschbarkeit der Ventile 10 mit den Absperrbauteilen 11 gewährleisten zu können.

Eine noch zusätzliche Erhöhung der Flexibilität wird dadurch gewährleistet, dass auch im noch freien unteren Eckbereich des Heizkörpers 1, hier in Fig. 1 im linken unteren stirnseitigen Eckbereich, ein seitlicher Anschlussstutzen 22 vorgesehen sind. Dieser dient als weiterer alternativer Rücklaufanschluss. Auch dieser Anschlussstutzen 22 - und jeder weitere Anschlussstutzen 22 - ist idealerweise baugleich wie die oberen Verbindungsstücke 8, 9, zumindest weisen diese Anschlussstutzen 22 aber identische Abmessungen und Dimensionen der Innengewinde aus, um auch dort Absperrbauteile 11 einsetzen zu können. Dies erhöht die Flexibilität der Anschlussmöglichkeiten und die Variabilität weiter.

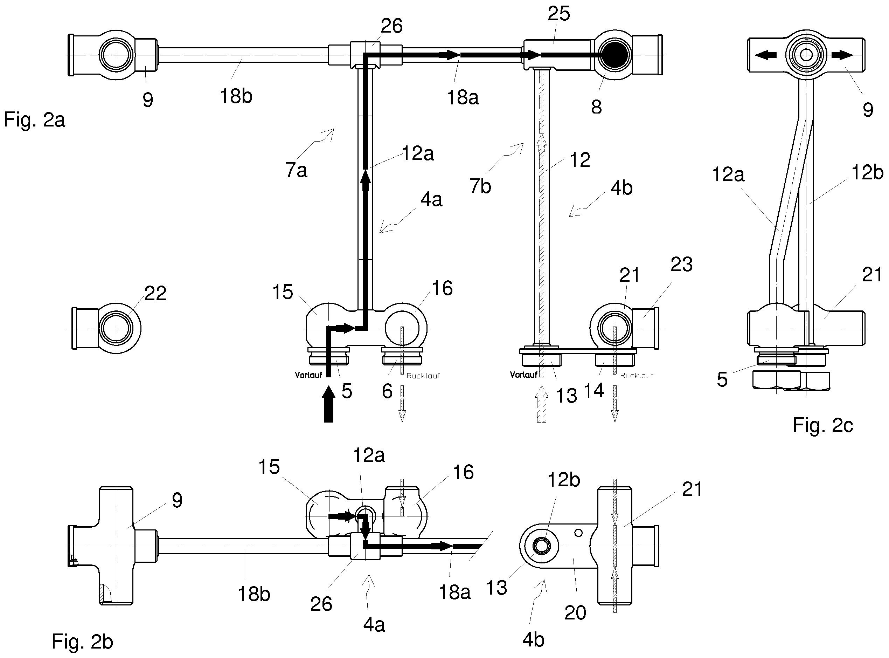

In den Fig. 2a, 2b und 2c ist eine sehr ähnliche Ausführungsform dargestellt, wobei hier allerdings nur die für die Durchströmung relevanten Bauteile dargestellt sind. In Fig. 2b ist eine Ansicht von Fig. 2a von oben dargestellt, wobei allerdings im rechtesten Bereich die Ansicht nicht von ganz oben erfolgt, sondern etwa von der Mitte nach unten mit Sicht von oben auf den rechten unteren Eckbereich mit dem zweiten alternativen Vorlaufanschluss 13.

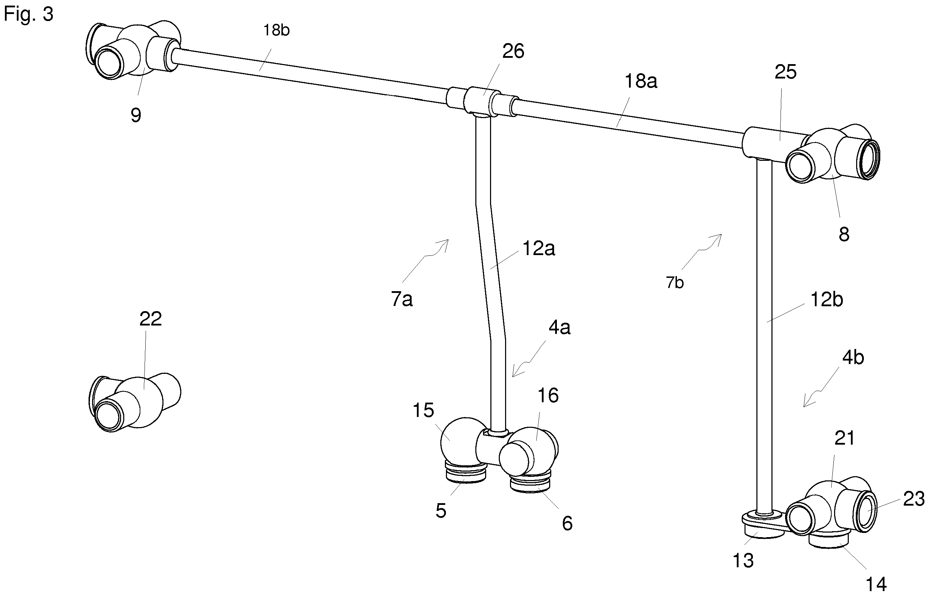

In Fig. 3 ist eine schematische perspektivische Ansicht einer zu den Ausführungsformen gemäß Fig. 1 und Fig. 2 analogen Anordnung dargestellt, wiederum beschränkt auf die relevanten Bauteile.

Die zweite alternative Anschlussgarnitur 4b bzw. die zweite Verteilergarnitur 7b kann alternativ gleichermaßen auch auf der gegenüberliegenden, hier linken, Seite des Heizkörpers 1 vorgesehen sein.

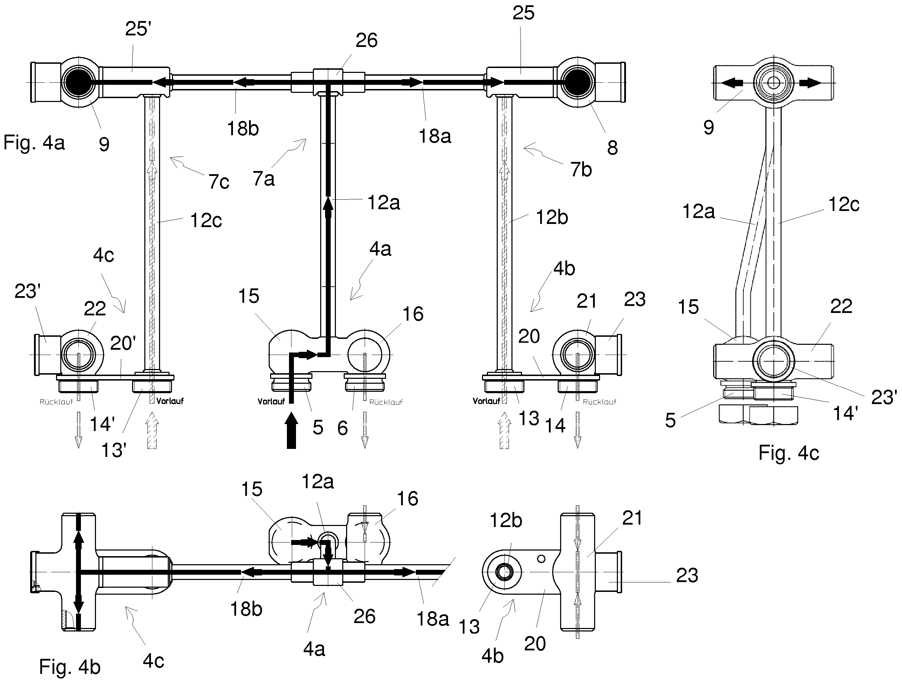

In den Fig. 4a, 4b und 4c ist eine weitere alternative Ausführungsform eines zweilagigen Heizkörpers 1 dargestellt, bei der sowohl im linken als auch im rechten unteren Eckbereich des Heizkörpers 1 jeweils eine Anschlussgarnitur 4b, 4c vorgesehen ist. Die Erklärungen und Bezugszeichen werden sinngemäß aus den Fig. 1 bis 3 herangezogen. Im rechten seitlichen Bereich des Heizkörpers 1 befindet sich wie in der Ausführungsform gemäß Fig. 1 eine zweite alternative Anschlussgarnitur 4b bzw. eine zweite Verteilergarnitur 7b. Analog spiegelbildlich hierzu befindet sich im linken seitlichen Bereich des Heizkörpers 1 nun noch eine dritte alternative Anschlussgarnitur 4c mit einem dritten alternativen Vorlaufanschluss 13' und einem dritten alternativen Rücklaufanschluss 14'. An diese dritte alternative Anschlussgarnitur 4c ist eine dritte Verteilergarnitur 7c angeschlossen mit einem dritten Steigrohr 12c. Auf diese Weise ist eine direkte und in diesem Fall die einzige Verbindung für das über den dritten alternativen Vorlaufanschluss 13' einströmende Heizfluid von der dritten alternativen Anschlussgarnitur 4c zu den Verbindungsstücken 8, 9 hergestellt.

Die dritte alternative Anschlussgarnitur 4c bzw. die dritte Verteilergarnitur 7c ist konstruktiv identisch zur zweiten alternativen Anschlussgarnitur 4b bzw. zur zweiten Verteilergarnitur 7b. Auch hier ist das dritte Steigrohr 12c gerade und vertikal nach oben ausgerichtet. Das dritte Steigrohr 12c ist ebenso als separater eigenständiger Bauteil ausgebildet und freistehend bzw. beabstandet von den Heizplatten 2, 3.

Das dritte Steigrohr 12c stellt die konstruktiv und fluidtechnisch einzige Verbindung für das Heizfluid dar, um von den dritten alternativen Vorlaufanschluss 13' nach oben zum horizontalen Rohr 18b zu gelangen. Von dort wird es nach links in das Verbindungsstück 9 geführt, und zwar über das Anschlussstück 25'. Ist im Verbindungsstück 9 ein Ventil eingesetzt, strömt das Heizfluid im Rohr 18b nach links und verteilt sich dann von dort auf die Heizplatten 2, 3. Ist im Verbindungsstück 9 ein Sperrbauteil 11 eingesetzt, wie dies in Fig. 1 der Fall ist, strömt das Heizfluid vom Steigrohr 12c nach rechts und zunächst über das Rohr 18b und weiter über das Rohr 18a bis zum Verbindungsstück 8, in dem ein Ventil 10 eingesetzt ist und verteilt sich dann so auf die Heizplatten 2,3.

Die in Fig. 4 in beide Richtungen angedeuteten Strömungspfeile sollen nur die Optionen verdeutlichen, die das Heizfluid abhängig von den in die Verbindungsstücke 8, 9 eingesetzten Ventilen 10 bzw. Absperrbauteilen 11 nehmen kann.

Zwischen der dritten alternativen Anschlussgarnitur 4c besteht keine mechanische oder fluidtechnische Verbindung zur ersten Anschlussgarnitur 4a oder zur zweiten alternativen Anschlussgarnitur 4b. Auch die ersten, zweiten und dritten Steigrohre 12a, 12b, 12c sind konstruktiv, räumlich und fluidtechnisch durchwegs voneinander getrennt.

Weitere alternative Ausführungsformen können entweder als einlagige oder als drei- oder mehrlagige Heizkörper ausgebildet sein. Derartige Varianten sind nicht in den Zeichnungen dargestellt und auch nicht näher beschrieben, die konstruktiven Ausgestaltungen ergeben sich jedoch analog zu den hier gezeigten Ausführungsformen.

So kann der Heizkörper 1 als mehrlagiger Heizkörper 1 mit paralleler Durchströmung ausgestaltet sein und beispielsweise drei, parallel zueinander ausgerichtete, Heizplatten 2,3,... aufweisen, eine erste raumseitigere Heizplatte 2, eine zweite wandseitige Heizplatte 3 und eine dritte noch weiter raumseitige Heizplatte. In das jeweilige Verbindungsstück 8, 9 ist wahlweise jeweils ein Ventil 10 zur Regelung des Durchflusses sowie zur parallelen Verteilung des vom ersten Vorlaufanschluss 5 kommenden Heizfluids in die Heizplatten 2,3,..., sowie ein Absperr- bzw. Dichtbauteil 11 zur Verhinderung des Eintritts von Heizfluid in die Heizplatten 2, 3, ... bzw. des Durchflusses zwischen den Heizplatten 2, 3, ... einsetzbar oder eingesetzt. Die Anschluss und Verteilergarnituren 4a, 4b bzw. 4c sind analog zu den Fig. 1 bis 4 vorgesehen und sind zwischen der ersten raumseitigen Heizplatte 2 und der zweiten wandseitigen Heizplatte 3 angeordnet.

Alternativ kann der Heizkörper auch als einlagiger Heizkörper 1 mit nur einer einzigen Heizplatte 2 ausgebildet sin, wobei in das Verbindungsstück 8, 9 auch hier wahlweise jeweils ein Ventil 10 zur Regelung des Durchflusses sowie ein Absperr- bzw. Dichtbauteil 11 zur Verhinderung des Eintritts von Heizfluid in die Heizplatte 2 einsetzbar oder eingesetzt ist. Die Anschluss und Verteilergarnituren 4a, 4b bzw. 4c sind ebenso analog zu den Fig. 1 bis 4 vorgesehen.

## Patentansprüche

1. Heizkörper (1) mit zumindest einer Heizplatte (2,3), insbesondere mit einer ersten, dem zu beheizenden Raum zugewendeten, raumseitigen Heizplatte (2) und einer zweiten wandseitigen Heizplatte (3),
- wobei in den seitlichen, oberen Endbereichen des Heizkörpers (1) bzw. der Heizplatte(n) (2,3) jeweils ein als Anschlussstelle ausgebildetes Verbindungsstück (8,9) angeschlossen ist, in das jeweils wahlweise ein Ventil (10) zur Regelung des Durchflusses des vom ersten Vorlaufanschluss (5) kommenden Heizfluids in die Heizplatte(n) (2,3) sowie ein Absperr- bzw. Dichtbauteil (11) zur Verhinderung des Eintritts von Heizfluid in die Heizplatte(n) (2,3) und zur Verhinderung des Durchflusses, einsetzbar oder eingesetzt ist,
- wobei eine, als Mittenanschluss ausgebildete, erste Anschlussgarnitur (4a) mit einem ersten Vorlaufanschluss (5) und einem ersten Rücklaufanschluss (6) vorgesehen ist,
- wobei eine, an die erste Anschlussgarnitur (4a) angeschlossene, erste Verteilergarnitur (7a) mit einem definierten ersten Steigrohr (12a) vorgesehen ist, die eine direkte, insbesondere die einzige, Verbindung für das, über den ersten Vorlaufanschluss (5) einströmende, Heizfluid von der ersten Anschlussgarnitur (4a) zu den Verbindungsstücken (8, 9) herstellt,
- wobei zumindest eine zweite Anschlussgarnitur (4b) mit einem zweiter Vorlaufanschluss (13) und gegebenenfalls einem zweiten Rücklaufanschluss (14) vorgesehen ist,
**dadurch gekennzeichnet, dass**
- eine, an die zweite Anschlussgarnitur (4b) angeschlossene, zweite Verteilergarnitur (7b) mit einem definierten zweiten Steigrohr (12b) vorgesehen ist, die eine direkte, insbesondere die einzige, Verbindung für das, über den zweiten Vorlaufanschluss (13) einströmende, Heizfluid von der zweiter Anschlussgarnitur (4b) zu den Verbindungsstücken (8, 9) herstellt.

2. Heizkörper nach Anspruch 1, **dadurch gekennzeichnet, dass** der erste Vorlaufanschluss (5) und der erste Rücklaufanschluss (6) als, insbesondere zumindest teilweise kugelabschnittsförmig ausgestaltete, Vorlauf- bzw. Rücklaufgehäuse (15, 16) ausgebildet sind oder solche aufweisen.

3. Heizkörper nach einem der Ansprüche 1 oder 2, **dadurch gekennzeichnet, dass** das erste Steigrohr (12a) im Bereich zwischen dem ersten Vorlaufanschluss (5) und dem ersten Rücklaufanschluss (6) und/oder im Bereich zwischen dem Vorlaufgehäuse (15) des ersten Vorlaufanschlusses (5) und dem Rücklaufgehäuse (16) des ersten Rücklaufanschlusses (6) konstruktiv angebunden ist.

4. Heizkörper nach einem der Ansprüche 1 bis 3, **dadurch gekennzeichnet, dass** das erste Steigrohr (12a) im oberen Bereich in eine T-Verzweigung (26) mündet, von der in entgegengesetzte Richtungen jeweils ein Rohr (18a, 18b) ausgeht, wobei jedes Rohr (18a, 18b) an seinem Endbereich jeweils mit dem Verbindungsstück (8,9) verbunden ist.

5. Heizkörper nach einem der Ansprüche 1 bis 4, **dadurch gekennzeichnet, dass** das erste Steigrohr (12a), von der Ebene der Heizplatte(n) (2, 3) betrachtet, in Bezug auf die Längserstreckung der Heizplatte(n) (2, 3) mittig angeordnet bzw. ausgerichtet ist und sich vorzugsweise gerade und vertikal, und insbesondere parallel zu den Seitenrändern der Heizplatte(n) (2, 3), nach oben erstreckt.

6. Heizkörper nach einem der Ansprüche 1 bis 5, **dadurch gekennzeichnet, dass** das erste Steigrohr (12a) von den seitlichen Stirnseiten der Heizplatte(n) (2, 3) betrachtet, eine von der Geraden abweichende Form besitzt und, insbesondere von einer unteren außermittigen Position in eine obere mittige Position, verschwenkt ist.

7. Heizkörper nach einem der Ansprüche 1 bis 6, **dadurch gekennzeichnet, dass** eine dritte Anschlussgarnitur (4c) mit einem dritten Vorlaufanschluss (13') und gegebenenfalls einem dritten Rücklaufanschluss (14') vorgesehen ist, wobei eine, an die dritte Anschlussgarnitur (4c) angeschlossene, dritte Verteilergarnitur (7c) mit einem definierten dritten Steigrohr (12c) vorgesehen ist, die eine direkte, insbesondere die einzige, Verbindung für das, über den dritten Vorlaufanschluss (13') einströmende, Heizfluid von der dritten Anschlussgarnitur (4c) zu den Verbindungsstücken (8, 9) herstellt.

8. Heizkörper nach einem der Ansprüche 1 bis 7 bzw. nach Anspruch 7, **dadurch gekennzeichnet, dass** der zweite und gegebenenfalls der dritte Vorlaufanschluss (13, 13') und gegebenenfalls der zweite und gegebenenfalls der dritte Rücklaufanschluss (14, 14') jeweils in einem der seitlichen, außermittigen, unteren Eckbereiche des Heizkörpers (1) angeordnet ist.

9. Heizkörper nach einem der Ansprüche 1 bis 8 bzw. nach einem der Ansprüche 7 und 8, **dadurch gekennzeichnet, dass** die zweite Anschlussgarnitur (4b) und die dritte Anschlussgarnitur (4c) jeweils in einem der seitlichen Bereiche des Heizkörpers (1), insbesondere näher zum seitlichen Rand der Heizplatte(n) (2,3) als zum ersten Steigrohr (12a), angeordnet ist.

10. Heizkörper nach einem der Ansprüche 1 bis 9 bzw. nach einem der Ansprüche 7 bis 9, **dadurch gekennzeichnet, dass** das erste Steigrohr (12a), das zweite Steigrohr (12b) und das dritte Steigrohr (12c) jeweils als separate und von den Heizkanälen der Heizplatten (2, 3) unabhängige und getrennte, Rohre ausgestaltet sind.

11. Heizkörper nach einem der Ansprüche 1 bis 10 bzw. nach einem der Ansprüche 7 bis 10, **dadurch gekennzeichnet, dass** das zweite Steigrohr (12b) und/oder das dritte Steigrohr (12c) gerade ausgebildet ist und sich vertikal, und insbesondere parallel zu den Seitenrändern der Heizplatte(n) (2, 3), nach oben erstreckt.

12. Heizkörper nach einem der Ansprüche 1 bis 11 bzw. nach einem der Ansprüche 7 bis 11, **dadurch gekennzeichnet, dass** das zweite Steigrohr (12b) und/oder das dritte Steigrohr (12c) mit seinem oberen Ende in eines der Rohre (18a, 18b) einmündet oder in ein, stromaufwärts des jeweiligen Verbindungsstücks (8,9) angeordneten und mit diesem Verbindungsstück (8,9) konstruktiv verbundenen, Anschlusselement (25, 25') einmündet, wobei das Anschlusselement (25,25') einen größeren Durchmesser als die Rohre (18a, 18b) aufweist.

13. Heizkörper nach einem der Ansprüche 1 bis 12 bzw. nach einem der Ansprüche 7 bis 12, **dadurch gekennzeichnet, dass** zwischen der ersten Anschlussgarnitur (4a) und der zweiten und/oder dritten Anschlussgarnitur (4b, 4c), insbesondere zwischen dem ersten Vorlaufanschluss (5) und dem zweiten und/oder dritten Vorlaufanschluss (13, 13'), keine direkte Fluidverbindung und/oder keine konstruktive Verbindung besteht und/oder dass der untere Bereich des Heizkörpers (1) frei von horizontalen Querverbindungen zwischen der ersten Anschlussgarnitur (4a) und der zweiten und/oder dritten Anschlussgarnitur (4b, 4c) ist.

14. Heizkörper nach einem der Ansprüche 1 bis 13 bzw. nach einem der Ansprüche 7 bis 13, **dadurch gekennzeichnet, dass** die zweite Anschlussgarnitur (4a) sowie die zweite Verteilergarnitur (7b) und die dritte Anschlussgarnitur (4c) sowie die dritte Verteilergarnitur (7c) zueinander konstruktiv identisch ausgebildet sind.

15. Heizkörper nach einem der Ansprüche 1 bis 14 bzw. nach einem der Ansprüche 7 bis 14, **dadurch gekennzeichnet, dass** der zweite Vorlaufanschluss (13) und der dritte Vorlaufanschluss (13') in einer gemeinsamen Ebene und auf einer gemeinsamen Achse auf einander gegenüberliegenden Seiten der ersten Anschlussgarnitur (4a) hinsichtlich der Längserstreckung des Heizkörpers (1) liegen.

16. Heizkörper nach einem der Ansprüche 1 bis 15 bzw. nach einem der Ansprüche 7 bis 15, **dadurch gekennzeichnet, dass** der zweite bzw. dritte Vorlaufanschluss (13, 13') mit dem zweiten bzw. dritten Rücklaufanschluss (14, 14') konstruktiv zu einer baulichen Einheit verbunden sind, insbesondere über einen flachen Steg (20,20').

17. Heizkörper nach einem der Ansprüche 1 bis 16 bzw. nach einem der Ansprüche 7 bis 16, **dadurch gekennzeichnet, dass** der zweite bzw. dritte Rücklaufanschluss (14, 14') als, insbesondere zumindest teilweise kugelabschnittsförmig ausgestaltetes, Rücklaufgehäuse (21,22), ausgebildet ist oder ein solches aufweist, und jeweils einen stirnseitigen, seitlich nach außen weisenden Rücklaufanschlussstutzen (23, 23') aufweist.

18. Heizkörper nach einem der Ansprüche 1 bis 17, **dadurch gekennzeichnet, dass** der Heizkörper (1) als zweilagiger Heizkörper (1) mit paralleler Durchströmung ausgestaltet ist und genau zwei, vorzugsweise parallel zueinander ausgerichtete, Heizplatten (2,3) aufweist, eine erste raumseitige Heizplatte (2) und eine zweite wandseitige Heizplatte (3), wobei in das Verbindungsstück (8, 9) wahlweise jeweils ein Ventil (10) zur Regelung des Durchflusses sowie zur parallelen Verteilung des vom ersten Vorlaufanschluss (5) kommenden Heizfluids in die beiden Heizplatten (2,3), sowie ein Absperr- bzw. Dichtbauteil (11) zur Verhinderung des Eintritts von Heizfluid in die beiden Heizplatten (2, 3) bzw. des Durchflusses zwischen den beiden Heizplatten (2, 3) einsetzbar oder eingesetzt ist,
oder
dass der Heizkörper (1) als mehrlagiger Heizkörper (1) mit paralleler Durchströmung ausgestaltet ist und zumindest drei, vorzugsweise genau drei, vorzugsweise parallel zueinander ausgerichtete, Heizplatten (2,3,...) aufweist, eine erste raumseitige Heizplatte (2), eine zweite wandseitige Heizplatte (3) und eine dritte noch weiter raumseitige Heizplatte,
wobei in das Verbindungsstück (8, 9) wahlweise jeweils ein Ventil (10) zur Regelung des Durchflusses sowie zur parallelen Verteilung des vom ersten Vorlaufanschluss (5) kommenden Heizfluids in die Heizplatten (2,3,...), sowie ein Absperr- bzw. Dichtbauteil (11) zur Verhinderung des Eintritts von Heizfluid in die Heizplatten (2, 3, ...) bzw. des Durchflusses zwischen den Heizplatten (2, 3, ...) einsetzbar oder eingesetzt ist,
oder
dass der Heizkörper (1) als einlagiger Heizkörper (1) mit einer einzigen Heizplatte (2) ausgebildet ist, wobei in das Verbindungsstück (8, 9) wahlweise jeweils ein Ventil (10) zur Regelung des Durchflusses sowie ein Absperr- bzw. Dichtbauteil (11) zur Verhinderung des Eintritts von Heizfluid in die Heizplatte (2) einsetzbar oder eingesetzt ist.

19. Heizkörper nach Anspruch 1 bis 18, **dadurch gekennzeichnet, dass** der erste Vorlaufanschluss (5) und der erste Rücklaufanschluss (6), und vorzugsweise auch der zweite und jeder weitere Vorlaufanschluss (13, 13') und der zweite und jeder weitere Rücklaufanschluss (14, 14'), und/oder alle Anschlussgarnituren (4a, 4b, 4c), und/oder alle Verteilergarnituren (7a, 7b, 7c), insbesondere alle Steigrohre (12a, 12b, 12c), und/oder alle Verbindungsstücke (8, 9), im Bereich zwischen der ersten Heizplatte (2) und der zweiten Heizplatte (3) liegen.

20. Heizkörper nach einem der Ansprüche 1 bis 19, **dadurch gekennzeichnet, dass** der erste Vorlaufanschluss (5) und der erste Rücklaufanschluss (6) und/oder der untere Endbereich des ersten Steigrohres (12a) in einer Ebene außermittig und ungleich beabstandet von der ersten und zweiten Heizplatte (2,3), insbesondere näher bei der wandseitigen zweiten Heizplatte (3), angeordnet sind.

21. Heizkörper nach einem der Ansprüche 1 bis 20, **dadurch gekennzeichnet, dass** der zweite und jeder weitere Vorlaufanschluss (13, 13') und der zweite und jeder weitere Rücklaufanschluss (14, 14') und/oder der untere Endbereich des zweiten und des dritten Steigrohres (12b, 12c) in einer Ebene mittig und gleich beabstandet von der ersten und zweiten Heizplatte (2,3) angeordnet sind.

22. Heizkörper nach einem der Ansprüche 1 bis 21, **dadurch gekennzeichnet, dass** in einem, vorzugsweise in jedem, freien unteren stirnseitigen Eckbereich des Heizkörpers (1) ein seitlicher Anschlussstutzen (22) als weiterer Rücklaufanschluss vorgesehen ist,
und/oder
dass alle seitlichen bzw. stirnseitigen Anschlüsse und Anschlussstutzen des Heizkörpers (1), insbesondere die Anschlüsse der Verbindungsstücke (8,9), die seitlichen Anschlussstutzen (22) und/oder die Rücklaufanschlussstutzen (23, 23'), gleiche Dimensionen, insbesondere gleiche Innendurchmesser bzw. Gewindedimensionen, zum wechselseitigen, austauschbaren Einsetzen von Ventilen (10) und/oder Absperr- bzw. Dichtbauteilen (11), aufweisen.

## Claims

1. Radiator (1) comprising at least one heating plate (2, 3), in particular comprising a first heating plate (2) on the room side facing the room to be heated and a second heating plate (3) on the wall side,
- wherein in the lateral, upper end regions of the radiator (1) or of the heating plate(s) (2, 3) a respective connecting piece (8, 9) configured as a connection point is attached, into which in each case optionally a valve (10) for regulating the flow of the heating fluid coming from the first flow connection (5) into the heating plate(s) (2, 3) as well as a shut-off or sealing component (11) for preventing the entry of heating fluid into the heating plate(s) (2, 3) and for preventing the flow can be inserted or is inserted,
- wherein a first connection fitting (4a) in the form of a central connection is provided comprising a first flow connection (5) and a first return connection (6),
- wherein a first distributor fitting (7a) attached to the first connection fitting (4a) with a defined first riser pipe (12a) is provided, which establishes a direct, in particular the only, connection for the heating fluid flowing in via the first flow connection (5) from the first connection fitting (4a) to the connection pieces (8, 9),
- wherein at least a second connection fitting (4b) with a second flow connection (13) and optionally a second return connection (14) is provided,
**characterised in that**
- a second distributor fitting (7b) attached to the second connection fitting (4b) with a defined second riser pipe (12b) is provided, which establishes a direct, in particular the only, connection for the heating fluid flowing in via the second flow connection (13) from the second connection fitting (4b) to the connecting pieces (8, 9).

2. Radiator according to claim 1, **characterised in that** the first flow connection (5) and the first return connection (6) are configured as flow or return housings (15, 16), in particular at least partially in the form of spherical sections, or have the same.

3. Radiator according to any one of claims 1 or 2, **characterised in that** the first riser pipe (12a) is structurally connected in the region between the first flow connection (5) and the first return connection (6) and/or in the region between the flow housing (15) of the first flow connection (5) and the return housing (16) of the first return connection (6).

4. Radiator according to any one of claims 1 to 3, **characterised in that** the first riser pipe (12a) opens in the upper region into a T-branch (26), from which in each case a pipe (18a, 18b) extends in opposite directions, each pipe (18a, 18b) being connected at its end region in each case to the connecting piece (8, 9).

5. Radiator according to any one of claims 1 to 4, **characterised in that** the first riser pipe (12a), viewed from the plane of the heating plate(s) (2, 3), is arranged or aligned centrally with respect to the longitudinal extent of the heating plate(s) (2, 3) and preferably extends straight and vertically, and in particular upwards parallel to the side edges of the heating plate(s) (2, 3).

6. Radiator according to any one of claims 1 to 5, **characterised in that** the first riser pipe (12a), viewed from the lateral end faces of the heating plate(s) (2, 3), has a shape deviating from a straight line and is pivoted, in particular from a lower off-centre position into an upper central position.

7. Radiator according to any one of claims 1 to 6, **characterised in that** a third connection fitting (4c) comprising a third flow connection (13') and optionally a third return connection (14') is provided, wherein a third distributor fitting (7c) attached to the third connection fitting (4c) and with a defined third riser pipe (12c) is provided, which makes a direct connection, in particular the only connection, for the heating fluid flowing in via the third flow connection (13') from the third connection fitting (4c) to the connecting pieces (8, 9).

8. Radiator according to any one of claims 1 to 7 or according to claim 7, **characterised in that** the second and optionally the third flow connection (13, 13') and optionally the second and optionally the third return connection (14, 14') are each arranged in one of the lateral, off-centre, lower corner regions of the radiator (1).

9. Radiator according to any one of claims 1 to 8 or according to any one of claims 7 and 8, **characterised in that** the second connection fitting (4b) and the third connection fitting (4c) are each arranged in one of the lateral regions of the radiator (1), in particular closer to the lateral edge of the heating plate(s) (2, 3) than to the first riser pipe (12a).

10. Radiator according to any one of claims 1 to 9 or according to any one of claims 7 to 9, **characterised in that** the first riser pipe (12a), the second riser pipe (12b) and the third riser pipe (12c) are each configured as separate pipes independent of and separate from the heating channels of the heating plates (2, 3).

11. Radiator according to any one of claims 1 to 10 or according to any one of claims 7 to 10, **characterised in that** the second riser pipe (12b) and/or the third riser pipe (12c) is straight and extends vertically upwards, and in particular parallel to the side edges of the heating plate(s) (2, 3).

12. Radiator according to any one of claims 1 to 11 or according to any one of claims 7 to 11, **characterised in that** the second riser pipe (12b) and/or the third riser pipe (12c) opens with its upper end into one of the pipes (18a, 18b) or opens into a connecting element (25, 25') arranged upstream of the respective connecting piece (8, 9) and structurally connected to this connecting piece (8, 9), the connecting element (25, 25') having a larger diameter than the pipes (18a, 18b).

13. Radiator according to any one of claims 1 to 12 or according to any one of claims 7 to 12, **characterised in that** there is no direct fluid connection and/or no structural connection between the first connection fitting (4a) and the second and/or third connection fitting (4b, 4c), in particular between the first flow connection (5) and the second and/or third flow connection (13, 13'), and/or **in that** the lower region of the radiator (1) is free of horizontal cross-connections between the first connection fitting (4a) and the second and/or third connection fitting (4b, 4c).

14. Radiator according to any one of claims 1 to 13 or according to any one of claims 7 to 13, **characterised in that** the second connection fitting (4a) as well as the second distributor fitting (7b) and the third connection fitting (4c) as well as the third distributor fitting (7c) are structurally identical to one another.

15. Radiator according to any one of claims 1 to 14 or according to any one of claims 7 to 14, **characterised in that** the second flow connection (13) and the third flow connection (13') lie in a common plane and on a common axis on opposite sides of the first connection fitting (4a) with respect to the longitudinal extent of the radiator (1).

16. Radiator according to any one of claims 1 to 15 or according to any one of claims 7 to 15, **characterised in that** the second or third flow connection (13, 13') is structurally connected to the second or third return connection (14, 14') to form a structural unit, in particular via a flat web (20, 20').

17. Radiator according to any one of claims 1 to 16 or according to any one of claims 7 to 16, **characterised in that** the second or third return connection (14, 14') is configured as a return housing (21, 22), in particular at least partially in the form of a spherical section, or has such a housing, and in each case has a return connection piece (23, 23') on the end face pointing laterally outwards.

18. Radiator according to any one of claims 1 to 17, **characterised in that** the radiator (1) is configured as a two-layer radiator (1) with parallel flow and has precisely two heating plates (2, 3), preferably aligned parallel to one another, a first heating plate (2) on the room side and a second heating plate (3) on the wall side, wherein optionally in each case a valve (10) for regulating the flow as well as for parallel distribution of the heating fluid coming from the first flow connection (5) into the two heating plates (2, 3), as well as a shut-off or sealing component (11) for preventing the flow of the heating fluid into the two heating plates (2, 3) or the flow between the two heating plates (2,3) can be or is inserted into the connecting piece (8, 9),
or
**in that** the radiator (1) is configured as a multilayer radiator (1) with parallel flow and has at least three, preferably precisely three, preferably mutually parallel heating plates (2, 3, ...), a first room-side heating plate (2), a second wall-side heating plate (3) and a third still further room-side heating plate,
wherein optionally a valve (10) for regulating the flow and for parallel distribution of the heating fluid coming from the first flow connection (5) into the heating plates (2, 3, ...), as well as a shut-off or sealing component (11) for preventing the entry of heating fluid into the heating plates (2, 3, ...) or the flow between the heating plates (2, 3, ...) can be or is inserted into the connecting piece (8, 9),
or
**in that** the radiator (1) is configured as a single-layer radiator (1) with a single heating plate (2), wherein optionally in each case a valve (10) for regulating the flow and a shut-off or sealing component (11) for preventing the entry of heating fluid into the heating plate (2) can be or is inserted into the connecting piece (8, 9).

19. Radiator according to claim 1 to 18, **characterised in that** the first flow connection (5) and the first return connection (6), and preferably also the second and each further flow connection (13, 13') and the second and each further return connection (14, 14'), and/or all connection fittings (4a, 4b, 4c), and/or all distributor fittings (7a, 7b, 7c), in particular all riser pipes (12a, 12b, 12c), and/or all connecting pieces (8, 9), are located in the region between the first heating plate (2) and the second heating plate (3).

20. Radiator according to any one of claims 1 to 19, **characterised in that** the first flow connection (5) and the first return connection (6) and/or the lower end region of the first riser pipe (12a) are arranged in a plane off-centre and unequally spaced from the first and second heating plates (2, 3), in particular closer to the wall-side second heating plate (3).

21. Radiator according to any one of claims 1 to 20, **characterised in that** the second and each further flow connection (13, 13') and the second and each further return connection (14, 14') and/or the lower end portion of the second and third riser pipes (12b, 12c) are arranged in a plane centrally of and equally spaced from the first and second heating plates (2, 3).

22. Radiator according to any one of claims 1 to 21, **characterised in that** a lateral connection fitting (22) is provided as a further return connection in a, preferably in each, free lower end corner region of the radiator (1),
and/or
**in that** all lateral or end connections and connection pieces of the radiator (1), in particular the connections of the connecting pieces (8, 9), the lateral connection pieces (22) and/or the return connection pieces (23, 23'), have the same dimensions, in particular the same internal diameters or thread dimensions, for the alternate, exchangeable insertion of valves (10) and/or shut-off or sealing components (11).

## Revendications

1. Radiateur (1) avec au moins une plaque chauffante (2, 3), en particulier avec une première plaque chauffante côté pièce (2) tournée vers la pièce à chauffer et une deuxième plaque chauffante côté mur (3),
- dans lequel dans les zones d'extrémité supérieures latérales du radiateur (1) ou de la ou des plaques chauffantes (2, 3), respectivement une pièce de connexion (8, 9) conçue en tant que point de raccordement est raccordée, dans lequel respectivement au choix une vanne (10) pour réguler le débit du fluide de chauffage provenant du premier raccordement d'arrivée (5) dans la ou les plaques chauffantes (2, 3) ainsi qu'une pièce d'arrêt ou d'étanchéité (11) pour empêcher l'entrée de fluide de chauffage dans la ou les plaques chauffantes (2, 3) et pour empêcher le débit peuvent être ou sont insérées,
- dans lequel une première garniture de raccordement (4a), conçue en tant que raccordement central, est prévue avec un premier raccordement d'arrivée (5) et un premier raccordement de retour (6),
- dans lequel une première garniture de distribution (7a) raccordée à la première garniture de raccordement (4a) est prévue avec un premier tube ascendant défini (12a), qui établit une connexion directe, en particulier la seule, pour le fluide de chauffage affluant par le premier raccordement d'arrivée (5), de la première garniture de raccordement (4a) aux pièces de connexion (8, 9),
- dans lequel au moins une deuxième garniture de raccordement (4b) est prévue avec un deuxième raccordement d'arrivée (13) et le cas échéant un deuxième raccordement de retour (14),
**caractérisé en ce que**
- une deuxième garniture de distribution (7b) raccordée à la deuxième garniture de raccordement (4b) est prévue avec un deuxième tube ascendant défini (12b), qui établit une connexion directe, en particulier la seule, pour le fluide de chauffage affluant par le deuxième raccordement d'arrivée (13), de la deuxième garniture de raccordement (4b) aux pièces de connexion (8, 9),

2. Radiateur selon la revendication 1, **caractérisé en ce que** le premier raccordement d'arrivée (5) et le premier raccordement de retour (6) sont conçus en tant que boîtiers d'arrivée ou de retour (15, 16), en particulier au moins partiellement en forme de section de sphère, ou présentent de tels boîtiers.

3. Radiateur selon l'une quelconque des revendications 1 ou 2, **caractérisé en ce que** le premier tube ascendant (12a) est relié par construction dans la zone entre le premier raccordement d'arrivée (5) et le premier raccordement de retour (6) et/ou dans la zone entre le boîtier d'arrivée (15) du premier raccordement d'arrivée (5) et le boîtier de retour (16) du premier raccordement de retour (6).

4. Radiateur selon l'une quelconque des revendications 1 à 3, **caractérisé en ce que** le premier tube ascendant (12a) débouche dans la zone supérieure dans un embranchement en T (26), d'où respectivement un tube (18a, 18b) s'étend dans des directions opposées, dans lequel chaque tube (18a, 18b) est connecté à sa zone d'extrémité respectivement à la pièce de connexion (8, 9).

5. Radiateur selon l'une quelconque des revendications 1 à 4, **caractérisé en ce que** le premier tube ascendant (12a), vu depuis le plan de la ou des plaques chauffantes (2, 3), est disposé ou orienté de manière centrale par rapport à l'extension longitudinale de la ou des plaques chauffantes (2, 3) et s'étend vers le haut de préférence de manière rectiligne et verticale, et en particulier parallèlement aux bords latéraux de la ou des plaques chauffantes (2, 3).

6. Radiateur selon l'une quelconque des revendications 1 à 5, **caractérisé en ce que** le premier tube ascendant (12a), vu depuis les faces frontales latérales de la ou des plaques chauffantes (2, 3), présente une forme différente de la droite et est pivoté, en particulier d'une position inférieure excentrée à une position supérieure centrale.

7. Radiateur selon l'une quelconque des revendications 1 à 6, **caractérisé en ce qu'**une troisième garniture de raccordement (4c) est prévue avec un troisième raccordement d'arrivée (13') et, le cas échéant, un troisième raccordement de retour (14'), dans lequel une troisième garniture de distribution (7c) raccordée à la troisième garniture de raccordement (4c) est prévue avec un troisième tube ascendant défini (12c), qui établit une connexion directe, en particulier la seule, pour le fluide de chauffage affluant par le troisième raccordement d'arrivée (13'), de la troisième garniture de raccordement (4c) aux pièces de connexion (8, 9).

8. Radiateur selon l'une quelconque des revendications 1 à 7 ou selon la revendication 7, **caractérisé en ce que** le deuxième et le cas échéant le troisième raccordement d'arrivée (13, 13') et le cas échéant le deuxième et le cas échéant le troisième raccordement de retour (14, 14') sont disposés respectivement dans une des zones d'angle inférieures latérales excentrées du radiateur (1).

9. Radiateur selon l'une quelconque des revendications 1 à 8 ou selon l'une quelconque des revendications 7 et 8, **caractérisé en ce que** la deuxième garniture de raccordement (4b) et la troisième garniture de raccordement (4c) sont disposées respectivement dans une des zones latérales du radiateur (1), en particulier plus près du bord latéral de la ou des plaques chauffantes (2, 3) que du premier tube ascendant (12a).

10. Radiateur selon l'une quelconque des revendications 1 à 9 ou selon l'une quelconque des revendications 7 à 9, **caractérisé en ce que** le premier tube ascendant (12a), le deuxième tube ascendant (12b) et le troisième tube ascendant (12c) sont respectivement conçus en tant que tubes séparés et indépendants des canaux de chauffage des plaques chauffantes (2, 3).

11. Radiateur selon l'une quelconque des revendications 1 à 10 ou selon l'une quelconque des revendications 7 à 10, **caractérisé en ce que** le deuxième tube ascendant (12b) et/ou le troisième tube ascendant (12c) est droit et s'étend verticalement vers le haut, et en particulier parallèlement aux bords latéraux de la ou des plaques chauffantes (2, 3).

12. Radiateur selon l'une quelconque des revendications 1 à 11 ou selon l'une quelconque des revendications 7 à 11, **caractérisé en ce que** le deuxième tube ascendant (12b) et/ou le troisième tube ascendant (12c) débouche avec son extrémité supérieure dans un des tubes (18a, 18b) ou débouche dans une pièce de connexion (25, 25') disposée en amont de la pièce de connexion respective (8, 9) et connecté par construction à cette pièce de connexion (8, 9), dans lequel l'élément de raccordement (25, 25') présente un diamètre supérieur à celui des tubes (18a, 18b).

13. Radiateur selon l'une quelconque des revendications 1 à 12 ou selon l'une quelconque des revendications 7 à 12, **caractérisé en ce qu'**il n'y a pas de liaison fluidique directe et/ou de liaison constructive entre la première garniture de raccordement (4a) et la deuxième et/ou la troisième garniture de raccordement (4b, 4c), en particulier entre le premier raccordement d'arrivée (5) et le deuxième et/ou le troisième raccordement d'arrivée (13, 13'), et/ou **en ce que** la zone inférieure du radiateur (1) est exempte de liaisons transversales horizontales entre la première garniture de raccordement (4a) et la deuxième et/ou la troisième garniture de raccordement (4b, 4c).

14. Radiateur selon l'une quelconque des revendications 1 à 13 ou selon l'une quelconque des revendications 7 à 13, **caractérisé en ce que** la deuxième garniture de raccordement (4a) ainsi que la deuxième garniture de distribution (7b) et la troisième garniture de raccordement (4c) ainsi que la troisième garniture de distribution (7c) sont de construction identique les unes aux autres.

15. Radiateur selon l'une quelconque des revendications 1 à 14 ou selon l'une quelconque des revendications 7 à 14, **caractérisé en ce que** le deuxième raccordement d'arrivée (13) et le troisième raccordement d'arrivée (13') se situent dans un plan commun et sur un axe commun sur des côtés opposés de la première garniture de raccordement (4a) par rapport à l'extension longitudinale du radiateur (1).

16. Radiateur selon l'une quelconque des revendications 1 à 15 ou selon l'une quelconque des revendications 7 à 15, **caractérisé en ce que** le deuxième ou le troisième raccordement d'arrivée (13, 13') sont reliés par construction au deuxième ou au troisième raccordement de retour (14, 14') pour former une unité de construction, en particulier par l'intermédiaire d'une traverse plate (20, 20').

17. Radiateur selon l'une quelconque des revendications 1 à 16 ou selon l'une quelconque des revendications 7 à 16, **caractérisé en ce que** le deuxième ou le troisième raccordement de retour (14, 14') est conçu en tant que boîtier de retour (21, 22), en particulier conçu au moins partiellement en forme de section de sphère, ou présente un tel boîtier, et présente respectivement une tubulure de raccordement de retour (23, 23') frontale orientée latéralement vers l'extérieur.

18. Radiateur selon l'une quelconque des revendications 1 à 17, **caractérisé en ce que** le radiateur (1) est conçu en tant que radiateur à deux couches (1) avec un écoulement parallèle et présente exactement deux plaques chauffantes (2, 3), de préférence orientées parallèlement l'une à l'autre, une première plaque chauffante (2) côté pièce et une deuxième plaque chauffante (3) côté mur, dans lequel au choix respectivement une vanne (10) pour réguler le débit ainsi que pour répartir parallèlement le fluide de chauffage provenant du premier raccordement d'arrivée (5) dans les deux plaques chauffantes (2, 3) ainsi qu'une pièce d'arrêt ou d'étanchéité (11) pour empêcher l'entrée de fluide de chauffage dans les deux plaques chauffantes (2, 3) ou le débit entre les deux plaques chauffantes (2,3) peuvent être ou sont insérées dans la pièce de connexion (8, 9), ou
que le radiateur (1) est conçu en tant que radiateur (1) à plusieurs couches avec un écoulement parallèle et présente au moins trois, de préférence exactement trois, de préférence orientées parallèlement les unes aux autres, plaques chauffantes (2, 3, ...), une première plaque chauffante (2) côté pièce, une deuxième plaque chauffante (3) côté mur et une troisième plaque chauffante encore plus côté pièce,
dans lequel au choix une vanne (10) pour réguler le débit ainsi que pour répartir parallèlement le fluide de chauffage provenant du premier raccordement d'arrivée (5) dans les plaques chauffantes (2, 3, ...) ainsi qu'une pièce d'arrêt ou d'étanchéité (11) pour empêcher l'entrée de fluide de chauffage dans les deux plaques chauffantes (2, 3, ...) ou le débit entre les deux plaques chauffantes (2, 3, ...) peut être ou est insérée dans la pièce de connexion (8, 9),
ou
**en ce que** le radiateur (1) est conçu en tant que radiateur (1) à une couche avec une seule plaque chauffante (2), dans lequel au choix respectivement une vanne (10) pour réguler le débit ainsi qu'une pièce d'arrêt ou d'étanchéité (11) pour empêcher l'entrée de fluide de chauffage dans la plaque chauffante (2) peuvent être ou sont insérées dans la pièce de connexion (8, 9).

19. Radiateur selon la revendication 1 à 18, **caractérisé en ce que** le premier raccordement d'arrivée (5) et le premier raccordement de retour (6), et de préférence également le deuxième et chaque raccordement d'arrivée supplémentaire (13, 13') et le deuxième et chaque raccordement de retour supplémentaire (14, 14'), et/ou toutes les garnitures de raccordement (4a, 4b, 4c), et/ou toutes les garnitures de distribution (7a, 7b, 7c), en particulier tous les tubes ascendants (12a, 12b, 12c), et/ou toutes les pièces de connexion (8, 9), se situent dans la zone entre la première plaque chauffante (2) et la deuxième plaque chauffante (3).

20. Radiateur selon l'une quelconque des revendications 1 à 19, **caractérisé en ce que** le premier raccordement d'arrivée (5) et le premier raccordement de retour (6) et/ou la zone d'extrémité inférieure du premier tube ascendant (12a) sont disposés dans un plan de manière excentrée et à une distance inégale de la première et de la deuxième plaque chauffante (2, 3), en particulier plus près de la deuxième plaque chauffante (3) côté mur.

21. Radiateur selon l'une quelconque des revendications 1 à 20, **caractérisé en ce que** le deuxième et chaque raccordement d'arrivée supplémentaire (13, 13') et le deuxième et chaque raccordement de retour supplémentaire (14, 14') et/ou la zone d'extrémité inférieure du deuxième et du troisième tube ascendant (12b, 12c) sont disposés dans un plan au centre et à distance égale de la première et de la deuxième plaque chauffante (2, 3).

22. Radiateur selon l'une quelconque des revendications 1 à 21, **caractérisé en ce que** dans une, de préférence dans chaque, zone d'angle frontale inférieure libre du radiateur (1), une tubulure de raccordement latérale (22) est prévue en tant que raccordement de retour supplémentaire,
et/ou
**en ce que** tous les raccords et tubulures de raccordement latéraux ou frontaux du radiateur (1), en particulier les raccords des pièces de connexion (8, 9), les tubulures de raccordement latérales (22) et/ou les tubulures de raccordement de retour (23, 23') présentent des dimensions identiques, en particulier des diamètres intérieurs ou des dimensions de filetage identiques, pour l'utilisation en alternance, interchangeable de vannes (10) et/ou de pièces d'arrêt ou d'étanchéité (11).
